# NEUE EUROPÄISCHE PATENTSCHRIFT

(11) **EP 0 431 123 B2**
(45) Veröffentlichungstag und Bekanntmachung des Hinweises auf die Entscheidung über den Einspruch: **03.11.1999**
(45) Hinweis auf die Patenterteilung: 16.08.1995
(21) Anmeldenummer: 90909714.9
(22) Anmeldetag: 15.06.1990
(51) Int. Cl.: B60S 1/18, G05G 5/04

(54) **ANTRIEBSVORRICHTUNG, INSBESONDERE FÜR EINE SCHEIBENWISCHERANLAGE AN EINEM KRAFTFAHRZEUG**
DRIVE DEVICE, ESPECIALLY FOR A WINDSCREEN WIPER INSTALLATION OF A MOTOR VEHICLE
DISPOSITIF D'ENTRAINEMENT, NOTAMMENT POUR ESSUIE-GLACE DE VEHICULES A MOTEUR

(30) Priorität: 24.06.1989 DE 3920731
(43) Veröffentlichungstag der Anmeldung: 12.06.1991
(73) Patentinhaber: ITT Automotive Europe GmbH, 60488 Frankfurt am Main (DE)
(72) Erfinder: BÖHMER, Rainer, D-7129 Brackenheim-Meimsheim (DE); BRUHN, Rainer, D-7500 Karlsruhe 21 (DE); RIENHARDT, Hans-Peter, D-7107 Neckarsulm (DE); WALTHER, Bernd, D-7120 Bietigheim-Bissingen (DE)
(74) Vertreter: Dreiss, Fuhlendorf, Steimle & Becker
(86) Internationale Anmeldenummer: EP9000951
(87) Internationale Veröffentlichungsnummer: WO9100203

(56) Entgegenhaltungen:
- EP-A- 0 316 831
- DE-A- 2 553 809
- DE-A- 2 744 282
- DE-A- 3 514 199
- DE-C- 3 237 269
- GB-A- 843 937
- US-A- 3 768 325

## Beschreibung

Die Erfindung geht aus von einer Antriebsvorrichtung, die insbesondere für eine Scheibenwischeranlage an einem Kraftfahrzeug verwendet wird und die Merkmale aus dem Oberbegriff des Anspruchs 1 aufweist.

Bei manchen Antrieben soll die Abtriebswelle nach dem Abschalten der Antriebsvorrichtung eine genau definierte, innerhalb bestimmter Toleranzen liegende Ruhelage einnehmen. Dies gilt beispielsweise auch für Scheibenwischeranlagen, bei denen das Wischblatt nach dem Abschalten möglichst nahe am Scheibenrand geparkt werden soll. Bei den in üblicher Weise von einem Elektromotor angetriebenen Wischblättern wird der Elektromotor beim Einfahren der Wischblätter in die Ruhelage durch Kurzschluß abgebremst. Diese elektrischodynamische Bremse führt nicht immer zu einer befriedigend genauen Ruhelage. Vielmehr ist diese Ruhelage noch in zu starkem Maße von der Batteriespannung und/oder dem Scheibenzustand abhängig. Auch das in einem Getriebe meist vorhandene Spiel zwischen einzelnen Getriebegliedern trägt dazu bei, daß nicht immer die gewünschte Ruhelage eingenommen wird. Das Getriebespiel bewirkt auch, daß während des Betriebs die Umkehrstellungen des Wischblatts nicht exakt eingehalten werden.

Bei einer aus der DE-A-35 14 199 bekannten Scheibenwischeranlage hat man dieses Problem dadurch zu lösen versucht, daß man den Pendelwinkel der Abtriebswelle durch jeweils einen Anschlag am verdrehsicher mit der Abtriebswelle verbundenen Ritzel und einen gehäusefesten Gegenanschlag für jede Drehrichtung begrenzt hat. Das Ritzel weist dabei eine Zahnlücke auf, und die beiden die Zahnlücke begrenzenden Zähne wirken als Anschläge des Ritzels über einen linear verschiebbaren Druckübertrager mit den Gegenanschlägen zusammen.

Auch aus der DE-A-37 40 312 ist eine Scheibenwischeranlage bekannt, bei der der Pendelwinkel der Abtriebswelle durch Anschläge für das Ritzel begrenzt werden soll. Bei dieser Scheibenwischeranlage ist in eine Bohrung des Ritzels ein Stift eingepreßt, der axial über eine Seite des Ritzels vorsteht, in einer Nut des Getriebegehäuses hin- und her läuft und in den Umkehrstellungen des Wischblatts gegen Gummisegmente stößt, die in die Nut des Getriebegehäuses eingesetzt sind. Den Stift kann man als Anschlagteil bezeichnen, durch das der Pendelwinkel der Abtriebswelle begrenzt wird.

Bei dieser Antriebsvorrichtung wird das Ritzel über eine oder zwei Anlaufscheiben axial am Boden bzw. am Deckel des Getriebegehäuses abgestützt.

Der Erfindung liegt die Aufgabe zugrunde, eine Antriebsvorrichtung mit den Merkmalen aus dem Oberbegriff des Anspruchs 1 so weiterzuentwickeln, daß das Anschlagteil mit geringem Aufwand sicher in der vorgesehenen Position im Getriebegehäuse untergebracht werden kann.

Diese Aufgabe wird erfindungsgemäß mit einer Antriebsvorrichtung gelost, die außer mit den Merkmalen aus dem Oberbegriff des Anspruchs 1 zusätzlich mit dem Merkmal ausgestattet ist, daß das Anschlagteil mit einem ringförmigen Abschnitt auf die Abtriebswelle aufgeschoben ist und der ringförmige Abschnitt des Anschlagteils als Anlaufscheibe zur axialen Abstützung des Ritzels am Getriebegehäuse dient. Bei einer erfindungsgemäßen Antriebsvorrichtung ist also das Anschlagteil so ausgebildet, daß die Abtriebswelle dazu herangezogen werden kann, das Anschlagteil in seiner Lage zu sichern. Eine Bohrung im Ritzel, die bisher einen zusätzlichen Bearbeitungsschritt des Ritzels bedingte, ist nicht mehr notwendig. Ist das Anschlagteil vom Ritzel um die Achse der Abtriebswelle verschwenkbar, so wird das Anschlagteil durch den die Abtriebswelle umgebenden ringförmigen Abschnitt gut geführt.

Ferner wird der ringförmige Abschnitt des Anschlagteils als Anlaufscheibe benutzt, so daß die Anzahl der Einzelteile reduziert werden kann.

Vorteilhafte Ausgestaltungen einer erfindungsgemäßen Antriebsvorrichtung kann man den Unteransprüchen entnehmen.

Insbesondere bei Antriebsvorrichtungen für Scheibenwischeranlagen an Kraftfahrzeugen tritt die Abtriebswelle auf der einen Seite des Ritzels aus dem Getriebegehäuse heraus und hat auf der anderen Seite des Ritzels ein über das Ritzel vorstehendes, sich jedoch innerhalb des Gehäuses befindliches Ende. In der bevorzugten Ausführung nach Anspruch 2 ist nun der ringförmige Abschnitt des Anschlagteils auf das vorstehende Ende der Abtriebswelle aufgeschoben. Die Montage ist dann besonders einfach. Außerdem kann der ringförmige Abschnitt des Anschlagteils über dem Ende der Abtriebswelle geschlossen sein, so daß auch dann, wenn die Abtriebswelle durch übermäßige axiale Kräfte gegenüber dem Ritzel axial verstellt wird, ein direktes Anlaufen der Abtriebswelle an das Getriebegehäuse, insbesondere an den Deckel des Getriebegehäuses, vermieden wird.

Aus Platzgründen kann es ungünstig erscheinen, den ringförmigen Abschnitt des Anschlagteils auf dem Ende der Abtriebswelle anzuordnen. Gemäß Anspruch 4 kann sich dann der ringförmig Abschnitt des Anschlagteils auf der Seite des Ritzels befinden, auf der die Abtriebswelle aus dem Getriebegehäuse heraustritt. Ist das Anschlagteil mit dem Ritzel verschwenkbar, so wirkt es meist mit gehäusefesten Gegenanschlägen zusammen, die sich auf der Seite des Ritzels im Getriebegehäuse befinden, auf der die Abtriebswelle aus dem Getriebegehäuse heraustritt. Liegt nun der ringförmige Abschnitt des Anschlagteils auch auf dieser Seite des Ritzels, so können sich ein Anschlag, mit dem das Anschlagteil mit den gehäusefesten Gegenanschlägen zusammenwirkt, und ein Mitnehmer, mit dem das Anschlagteil in eine Aussparung des Ritzels eingreift, auf gegenüberliegenden Seiten des ringförmigen Abschnitts befinden. Auch bei einem beliebigen Versatz von Anschlag und Mitnehmer in Umfangsrichtung des ringförmigen Abschnitts ist dann eine axiale Entformung des Anschlagteils möglich.

Um die Anschläge während des Betriebs nicht Schaden nehmen zu lassen, sollten entweder die gehäusefesten Gegenanschläge oder der Anschlag am Anschlagteil elastisch nachgiebig ausgebildet werden. Insbesondere hat man bisher für die gehäusefesten Anschläge ein nachgiebiges Gummimaterial verwendet. Damit nun bei von außen angreifenden großen Kräften, die die Abtriebswelle zu verdrehen suchen, das Gummimaterial nicht übermäßig zusammengedrückt und Teile des Getriebes beschädigt werden, ist gemäß Anspruch 13 vorgesehen, daß das Anschlagteil einen Zweiten Anschlag aufweist, der mit mindestens einem starren gehäusefesten Anschlag zusammenwirkt, und daß der Abstand zwischen dem ersten Anschlag und dem nachgiebigen Gegenanschlag kleiner ist als zwischen dem zweiten Anschlag und dem starren Gegenanschlag. Auf diese Weise wird erreicht, daß im normalen Betrieb der Antriebsvorrichtung jeweils der erste Anschlag gegen die nachgiebigen Gegenanschläge stößt. Bei einer versuchten Verdrehung der Abtriebswelle von außen stößt, nachdem der elastische Anschlag etwas nachgegeben hat, der zweite Anschlag auf den starren Gegenanschlag und verhindert dadurch ein weiteres Verdrehen der Abtriebswelle, so daß das Material des elastischen Anschlags geschont und eine Beschädigung von Getriebegliedern vermieden wird.

Bei einem kleinen Pendelwinkel der Abtriebswelle kann es genügen, wenn man als Ritzel ein Zahnsegment verwendet, dessen äußerste Zähne direkt mit elastisch nachgiebigen, gehäusefesten Gegenanschlägen zusammenwirken. In diesem Fall können die gehäusefesten Gegenanschläge an einem Anschlagteil ausgebildet sein, das einen festen Sitz im Getriebegehäuse hat. Die elastisch nachgiebigen, gehäusefesten Gegenanschläge erhält man vorteilhafterweise dadurch, daß der ringförmige Abschnitt des Anschlagteils, der auf die Abtriebswelle aufgeschoben ist, einstückig mit zumindest einem elastisch nachgiebigem Arm hergestellt ist. Um ein überdehnen des elastisch nachgiebigen Arms zu verhindern, ist diesem gemäß Anspruch 17 ein starrer Anschlag nachgeordnet, gegen den der Arm nach einem bestimmten Weg stößt.

Es ist bekannt, ein zu dem Getriebe einer Antriebsvorrichtung gehörendendes Kurbelrad über einen Ring außerhalb des Kurbelradius axial abzustützen. Gemäß Anspruch 19 sind nun der Ring und das Anschlagteil einstückig aus Kunststoff hergestellt, so daß nur wenig Einzelteile Zu montieren sind.

Will man für verschiedene Pendelwinkel der Abtriebswelle nicht jeweils ein anderes großes, aus Anschlagteil und Abstützring des Kurbelrades bestehendes Kunststoffteil verwenden, so stellt man das Anschlagteil vorteilhafterweise separat vom Abstützring her, so daß nur dieses an den anderen Pendelwinkel angepaßt werden muß. Aber auch dann wird der Abstützring Zweckmäßigerweise zum Halten des Anschlagteils verwendet, indem an ihn ein Halteteil angeformt ist, das sich bis zum Anschlagteil erstreckt und das mit dem Anschlagteil ineinandergesteckt ist.

Mehrere Ausführungsbeispiele einer erfindungsgemäßen Antriebsvorrichtung sind in den Zeichnungen dargestellt. Anhand der Figuren dieser Zeichnungen wird die Erfindung nun näher erläutert.

Es zeigen:
- Fig. 1: in Achsrichtung der Abtriebswelle eine Sicht in das offene, ein Pendelgetriebe aufnehmende Getriebegehäuse einer ersten Ausführung, bei der das Anschlagteil auf das Ende der Abtriebswelle aufgeschoben ist,
- Fig. 2: in Achsrichtung der Abtriebswelle eine Sicht in das offene Getriebegehäuse nach Fig. 1, wobei jedoch nun die Getriebeteile weggelassen sind,
- Fig. 3: einen Schnitt entlang der Linie III-III aus Fig. 1,
- Fig. 4: eine Ansicht des Anschlagteils aus den Fig. 1 und 3 in Richtung des Pfeiles A aus Fig. 3,
- Fig. 5: eine Ansicht des Anschlagteils in Richtung des Pfeiles B aus Fig. 4,
- Fig. 6: einen Schnitt entlang der Linie VI-VI aus Fig. 4,
- Fig. 7: in einem Schnitt entsprechend dem aus Fig. 3 ein zweites Ausführungsbeispiel, bei dem sich der ringförmige Abschnitt des Anschlagteils auf der Seite des Ritzels befindet, auf der die Abtriebswelle das Getriebegehäuse verläßt,
- Fig. 8: eine Ansicht des Ausführungsbeispiels in Richtung des Pfeiles C aus Fig. 7, wobei jedoch das Getriebegehäuse weggelassen ist,
- Fig. 9: in einem vergrößerten Maßstab eine Prinzipskizze des zweiten Ausführungsbeispiels und
- Fig. 10: in Achsrichtung der Abtriebswelle eine Sicht in das offene Getriebegehäuse eines dritten Ausführungsbeispiels, bei dem das Anschlagteil die gehäusefesten Anschläge aufweist.

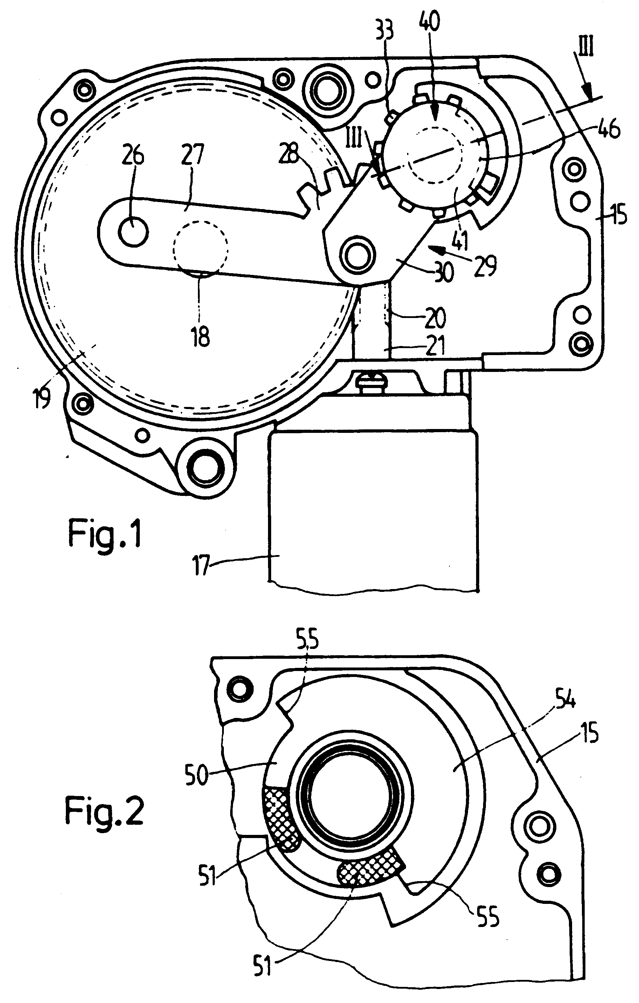

Bei der in den Fig. 1 bis 3 gezeigten Antriebsvorrichtung für einen Scheibenwischer an einem Kraftfahrzeug befindet sich ein Pendelgetriebe in einem topfförmigen Getriebegehäuse 15, das durch einen Deckel 16 verschlossen und an das Gehäuse 17 eines Elektromotors angeflanscht ist.

In das Getriebegehäuse 15 ist in Stehbolzen 18 eingepreßt, auf dem ein Schneckenrad 19 drehbeweglich gelagert ist, das in bekannter Weise von einer Schnecke 20 angetrieben wird, die Teil der Rotorwelle 21 des Elektromotors ist. An dem Schneckenrad 19 ist exzentrisch ein Bolzen 26 drehbeweglich gelagert, an dem eine Schubstange 27 befestigt ist. Der über das Schneckenrad 19 vorstehende Abschnitt des Bolzens 26 kann als Kurbelzapfen einer Kurbel betrachtet werden, deren Länge dem Abstand des Bolzens 26 von der Achse des Stehbolzens 18 entspricht. An ihrem dem Bolzen 26 entfernten Ende ist die Schubstange 27 als Zahnsegment 28 ausgebildet und zentrisch zu diesem Zahnsegment schwenkbar an einer insgesamt mit 29 bezeichneten Schwinge angelenkt. Die Schwinge besteht aus zwei im Abstand zueinander gehaltenen Hebeln 30 und 31, die zu beiden Seiten eines drehfest auf einer Abtriebswelle 32 sitzenden Ritzels 33 drehbar auf der Abtriebswelle gelagert sind und auch das Zahnsegment 28 an der Schubstange 27 einrahmen. Von der Schwinge 29 werden das Zahnsegment 28 und das Ritzel 33, das ebenfalls nur ein Zahnsegment ist, in Eingriff miteinander gehalten. Der Hebel 31 liegt auf seiner dem Ritzel 33 abgewandten Seite über eine Anlaufscheibe 34 auf einem an das Getriebegehäuse 15 einstückig angeformten und in das Innere des Gehäuses vorspringenden Lagerauge 35 für die Abtriebswelle 32 auf. Der Hebel 30 stützt sich auf seiner dem Ritzel 33 abgewandten Seite ebenfalls über eine Anlaufscheibe am Deckel 16 ab. Somit sind die Hebel 30 und 31 im Bereich der Abtriebswelle 32 auf beiden Seiten axial abgestützt und können deshalb nicht verkanten. Über die Hebel ist auch die axiale Position des Ritzels 33 und der Abtriebswelle 32 bestimmt.

Im Betrieb wird das Schneckenrad 19 vom Elektromotor über die Schnecke 20 in eine bestimmte Drehrichtung angetrieben und nimmt dabei den Bolzen 26 mit, der somit um die Achse des Stehbolzens 18 kreist. Die Schubstange 27 muß der Bewegung des Bolzens 26 folgen und eine hin- und hergehende Bewegung ausführen, der eine Schwenkbewegung überlagert ist. Die Bewegung der Schubstange 27 wird über das Zahnsegment 28 und das Ritzel 33 in eine pendelnde Drehbewegung der Abtriebswelle 32 umgewandelt. Dabei sollen nun die Umkehrpositionen der Abtriebswelle während des Betriebs möglichst unverändert beibehalten werden. Ebenso soll nach dem Ausschalten der Antriebsvorrichtung die Ruhelage der Abtriebswelle, die in den betrachteten Ausführungsbeispielen mit einer Umkehrlage identisch ist, sehr genau erreicht werden.

Es sind deshalb Maßnahmen vorgesehen, durch die der Einfluß des zwischen den einzelnen Getriebegliedern vorhandenen Spiels auf die Umkehrlagen und die Ruhelage der Abtriebswelle ausgeschaltet werden soll. Und zwar wird die Pendelbewegung der Abtriebswelle in den Umkehrlagen durch Anschläge begrenzt.

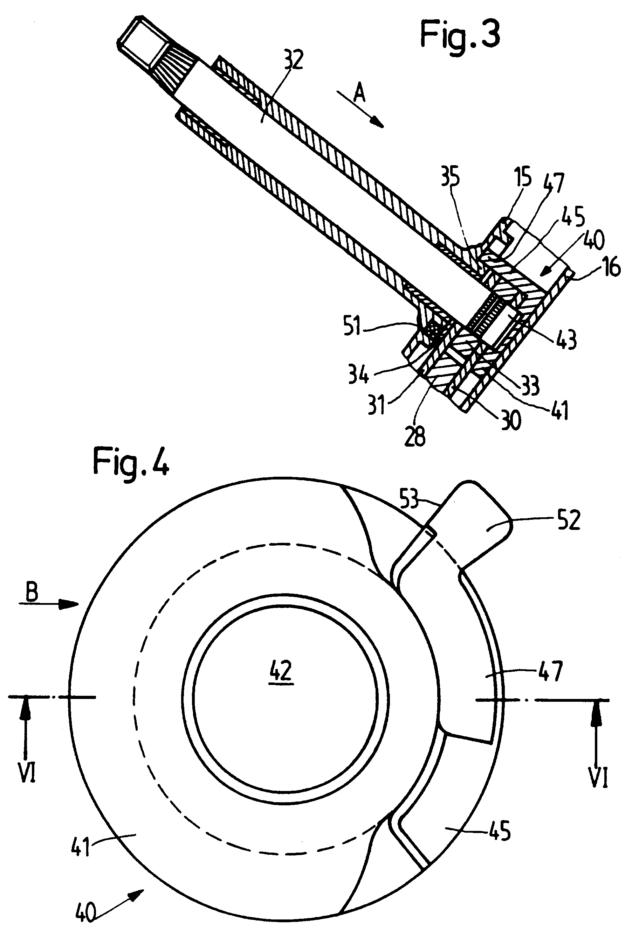

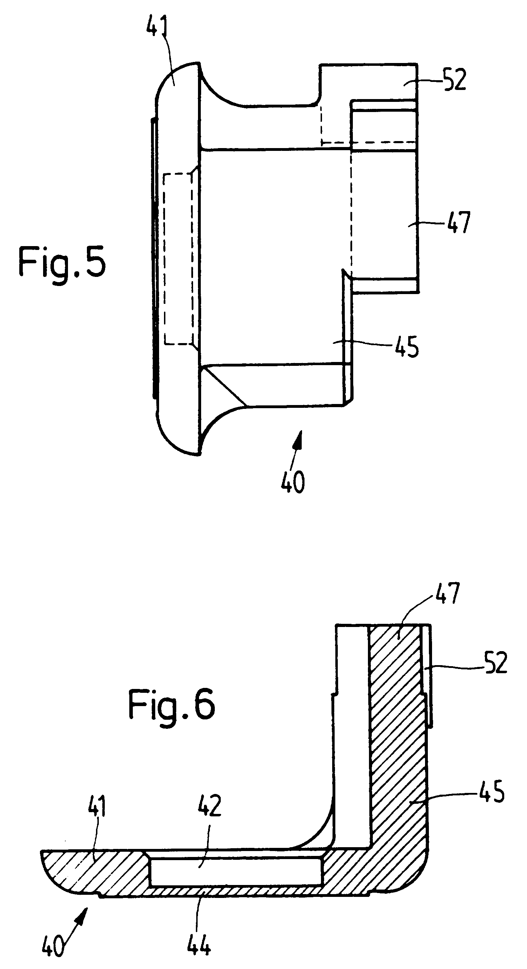

Zunächst ist ein Anschlagteil 40 vorgesehen, dessen Position im Getriebegehäuse aus den Fig. 1 und 3 ersichtlich ist, und das in den Fig. 4 bis 6 näher dargestellt ist. Das Anschlagteil 40 weist einen ringförmigen Abschnitt 41 auf, der mit einer mittigen Bohrung 42 auf das über das Ritzel 33 und den Hebel 30 der Schwinge 29 vorstehende Ende 43 der Abtriebswelle 32 aufgeschoben ist. Dadurch ist das Anschlagteil 40, das mit dem Ritzel 33 verschwenkbar ist, sicher in seiner vorgesehenen Position gehalten und während der Verschwenkung gut geführt. Der ringförmige Abschnitt 41 ist in seiner Dicke auf den Abstand des Hebels 30 vom Deckel 16 des Getriebegehäuses abgestimmt und dient zugleich als Anlaufscheibe, über die sich der Hebel 30 axial am Deckel 16 abstützt. Über dem Ende 43 der Abtriebswelle 32 ist die Bohrung 42 durch einen Boden 44, der in der richtigen axialen Position der Abtriebswelle 32 einen Abstand von dieser hat, durch den jedoch vermieden wird, daß die Abtriebswelle 32 direkt gegen den Deckel 16 anläuft, wenn sie durch übermäßige äußere Kräfte axial verschoben worden ist.

Am Außenrand steht von dem ringförmigen Abschnitt 41 des Anschlagteils 40 in Richtung auf das Ritzel 33 zu ein Mitnehmer 45 ab, dessen Bogenlänge etwa 100° beträgt und mit dem das Anschlagteil 40 in eine zahnfreie Aussparung 46 am Umfang des Ritzels 33 axial eingreift. Diese Aussparung 46 am Umfang des Ritzels 33 läßt sich durch Stanzen in demselben Arbeitsgang herstellen, in dem auch die Zähne des Ritzels geformt werden. Die Bogenlänge der Aussparung 46 im Ritzel 33 und die Bogenlänge des Mitnehmers 45 sind so aufeinander abgestimmt, daß ein solch geringes Spiel vorhanden ist, daß einerseits eine leichte Montage des Anschlagteils 41 möglich ist, andererseits aber Ritzel 33 und Anschlagteil 40 in Schwenkrichtung praktisch ohne toten Gang miteinander gekoppelt sind.

In dieselbe Richtung wie der Mitnehmer 45 vom ringförmigen Abschnitt 41 steht vom Mitnehmer 45 ein Anschlag 47 ab, dessen Bogenlänge wesentlich kleiner als diejenige des Mitnehmers 45 ist. Auch ist, in Umfangsrichtung betrachtet, die Mitte des Anschlags 47 gegenüber der Mitte des Mitnehmers 45 versetzt. Allerdings ist die Versetzung nicht so groß, daß der Anschlag 47 in Umfangsrichtung über den Mitnehmer 45 vorsteht, so daß bei der Herstellung des Anschlagteils 40 aus Kunststoff eine einfache axiale Entformung des Anschlags 47 möglich ist.

Wenn das Anschlagteil 40 durch das Ritzel 33 verschwenkt wird, bewegt sich der Anschlag 47 in einer kreisbogenförmigen Nut 50, die in den Boden des Getriebegehäuses 15 eingelassen ist. In die Nut sind Gummisegmente 51 eingesetzt, die vor den Enden der Nut 50 liegen und durch die Anlaufscheibe 34, die im Bewegungsbereich des Anschlags 47 so ausgebildet ist, daß sie dessen Bewegung nicht behindert, in der Nut gesichert sind. So kann z.B. die Außenkontur der Anlaufscheibe 34 im Bewegungsbereich des Anschlags 47 radial zurückgesetzt sein. Durch einen Versatz zwischen dem Mitnehmer 45 und dem Anschlag 47 ist es möglich, je nach den im Gehäuse 15 vorliegenden Gegebenheiten eine günstige Lage für die Gummisegmente 51 zu finden.

Im Betrieb wird der Anschlag 47 des Anschlagteils 40 mit der gleichen Winkelgeschwindigkeit wie die Abtriebswelle 32 in der Nut 50 hin- und herbewegt. Wenn die Abtriebswelle und ein von ihr getragener Scheibenwischer eine Umkehrlage erreichen, stößt der Anschlag 47 gegen eines der Gummisegmente 51 in der Nut 50, so daß das gesamte unvermeidliche Spiel im Getriebe auf die der vorangegangenen Schwenkrichtung entgegengesetzte Seite gebracht wird und sich nicht auf die Umkehrlage der Abtriebswelle und eines Scheibenwischers auswirken kann. Aufgrund der Gummisegmente sind die Anschlaggeräusche sehr gering. Die Gummisegmente 51 bilden gehäusefeste, elastisch nachgiebige Gegenanschläge für den Anschlag 47 am Anschlagteil 40.

Im wesentlichen auf Höhe des Anschlags 47 ist an das Anschlagteil 40 ein zweiter Anschlag 52 angeformt, der radial über den ringförmigen Abschnitt 41 und damit auch über die sich innerhalb des Umfangs dieses Abschnitts befindlichen Mitnehmer 45 und Anschlag 47 des Anschlagteils 40 radial übersteht, sich in Umfangsrichtung über etwa 15° erstreckt und dessen Mitte zur Mitte des Mitnehmers 45 in dieselbe Richtung wie die Mitte des Anschlags 47 so weit versetzt ist, daß eine in Umfangsrichtung zeigende Seitenfläche 53 in derselben axialen Ebene wie eine Seitenfläche des Mitnehmers 45 liegt.

Im Betrieb bewegt sich der zweite Anschlag 52 des Anschlagteils 40 außerhalb des Anschlags 47 in einem verbreiterten Bereich 54 der Nut 50 des Gehäuses 15. Die Schultern an den Übergängen zwischen dem breiten Abschnitt 54 der Nut und den schmalen Abschnitten bilden gehäusefeste, starre Gegenanschläge 55 für den Anschlag 52 des Anschlagteils 40. Ihre Position ist unter Berücksichtigung der Länge der Anschläge 47 und 52 des Anschlagteils 40 auf die Position der Gummisegmente 51 so abgestimmt, daß der Anschlag 52 im normalen Betrieb nicht gegen die Gegenanschläge 55 stößt. Wird aber unter Aufwendung großer Kräfte versucht, die Abtriebswelle von außen zu drehen, dann drücken sich die Gummisegmente 51 nur so weit zusammen, bis der Anschlag 52 gegen einen der Gegenanschläge 55 trifft. Es wird dadurch vermieden, daß das Material der Gummisegmente 51 zu stark beansprucht und irgendwelche Getriebeteile beschädigt werden.

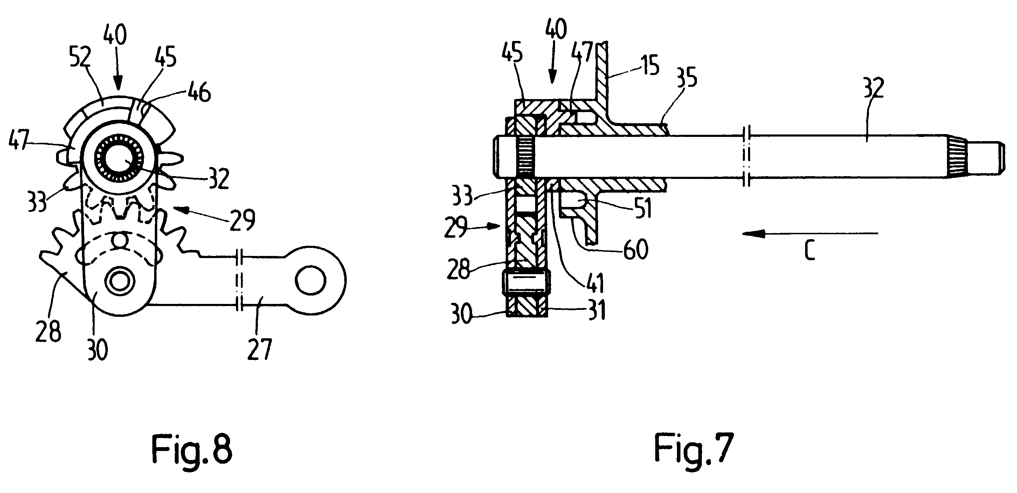

Die Ausführung nach den Fig. 7 und 8 besitzt vom Prinzip her das gleiche Getriebe wie die Ausführung nach den Fig. 1 bis 6. In den Fig. 7 und 8 sind jedoch nur die Schubstange 27 mit dem Zahnsegment 28, die Schwinge 29 mit den beiden Hebeln 30 und 31, das Ritzel 33 und die Abtriebswelle 32 gezeichnet. In Fig. 7 erkennt man auch einen Teil des Getriebegehäuses 15 mit einem Lagerauge 35 für die Abtriebswelle 32.

Anders als bei der Ausführung nach den Fig. 1 bis 6 befindet sich nun jedoch der ringförmige Abschnitt 41 des Anschlagteils 40 auf der Seite des Ritzels 33, auf der Abtriebswelle 32 aus dem Getriebegehäuse 15 heraustritt. Der ringförmige Abschnitt 41 liegt als Anlaufscheibe zwischen dem Hebel 31 der Schwinge 29 und dem Getriebegehäuse 15. Ein in Richtung Ritzel 33 axial vom ringförmigen Abschnitt 41 abstehender Mitnehmer 45 des Anschlagteils 40 greift in eine Aussparung 46 am Umfang des Ritzels 33 weitgehend spiel frei ein. In die entgegengesetzte Richtung erstreckt sich von dem ringförmigen Abschnitt 41 ein Anschlag 47, der, wie bei der Ausführung nach den Fig. 1 bis 6, mit in das Getriebegehäuse 15 eingesetzten Gummisegmenten 51 als Gegenanschlägen zusammenwirkt.

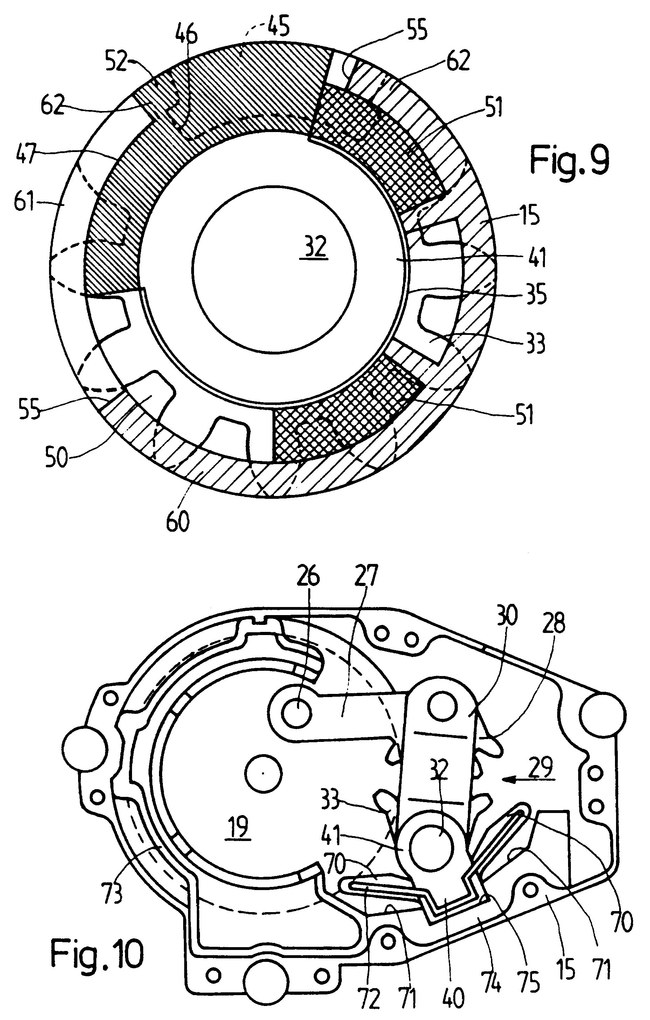

In der Prinzipskizze nach Fig. 9 sind die Positionen der Gummisegmente 51 in Umfangsrichtung um das Lagerauge 35 des Gehäuses 15 herum gut erkennbar. Der Anschlag 47 liegt am einen Gummisegment 51 an. Seine Bogenlänge beträgt etwa 110°, während die Gummisegmente 51 etwa 195° voneinander entfernt sind. Der Pendelwinkel der Abtriebswelle 32 soll also etwa 85° betragen.

Der Anschlag 47 bewegt sich in einer Nut 50, die innen vom Lagerauge 35 des Gehäuses 15 und außen von einer zusätzlichen zylindrischen Wand 60 des Gehäuses 15 gebildet wird. Innerhalb eines bestimmten Winkelbereichs ist diese äußere Wand 60 um einen bestimmten Betrag erniedrigt, so daß ein Einschnitt 61 entstanden ist, dessen Begrenzungen in Umfangsrichtung starre Gegenanschläge 55 für einen zweiten Anschlag 52 des Anschlagteils 40 bilden. Dieser zweite Anschlag befindet sich radial außerhalb des ersten Anschlags 47, hat jedoch axial eine geringere Höhe. Die Länge der Anschläge 47 und 52 sowie die Lage der Gegenanschläge 51 und 55 ist so gewählt, daß im Normalbetrieb nur der Anschlag 47 gegen die Gegenanschläge 51 stößt. Der Anschlag 52 und seine Gegenanschläge 55 werden nur wirksam, wenn die Abtriebswelle 32 von außen zu drehen gesucht wird. Aus Fig. 9 erkennt man deutlich, daß sich auch noch der zweite Anschlag 52 des Anschlagteils 40 innerhalb des Kopfkreises des Ritzels 33 befindet. Das Anschlagteil 40 trägt also radial nicht über das Ritzel 33 hinaus auf.

In Fig. 9 ist gestrichelt der Umriß der Aussparung 46 im Ritzel 33 angezeichnet, die den Mitnehmer 45 des Anschlagteils 40 aufnimmt. Man sieht, daß das Ritzel 33 im Abstand zur radial inneren Begrenzungsfläche der Aussparung 46 mit zwei Vorsprüngen 62 in Umfangsrichtung in die Aussparungen 46 hineinragt. Der Querschnitt des Mitnehmers 45 am Anschlagteil 40 entspricht dem Querschnitt der Aussparung 46. Der Mitnehmer greift also, radial gesehen, hinter die beiden Vorsprünge 62 des Ritzels 33 und ist dadurch in axialer Richtung direkt am Ritzel 33 gesichert.

In Fig. 9 besonders deutlich erkennbar, aber auch aus Fig. 8 ersichtlich, ist, daß die Mitten des Anschlags 47 und des Anschlags 52 gegen die Mitte des Mitnehmers 45 des Anschlagteils 40 in Umfangsrichtung versetzt sind. Die Anschläge 47 und 52 einerseits und der Mitnehmer 45 andererseits ragen sogar in Umfangsrichtung jeweils über den anderen Teil hinaus. Anders als bei einem Anschlagteil 40, bei dem sich die Anschläge und der Mitnehmer auf derselben Seite des ringförmigen Abschnitts 41 befinden, kann das Anschlagteil nach den Fig. 7 bis 9 aber auch jetzt noch axial entformt werden.

An sich wäre es aus Festigkeitsgründen nicht notwendig, daß der Anschlag 47 in Umfangsrichtung so lang wie bei dem Ausführungsbeispiel nach den Fig. 7 bis 9 ist und dementsprechend die Gummisegmente 51 so weit wie dargestellt voneinander entfernt sind. Die gewählte Anordnung der Gummisegmente 51 hat jedoch den Vorteil, daß bei einem größeren Pendelwinkel der Abtriebswelle 32 lediglich das gezeigte Anschlagteil 40 gegen ein anderes Anschlagteil mit in Umfangsrichtung kürzeren Anschlägen 47 und 52 ausgetauscht werden muß, ohne daß am Gehäuse 15 etwas zu ändern wäre. Ein geändertes Anschlagteil 40 läßt sich relativ leicht herstellen, während das Gehäuse 15 im allgemeinen ein kompliziertes Teil ist, das möglichst für verschiedene Ausführungen von Antriebsvorrichtungen gleich bleiben soll.

Bei den beiden bisher beschriebenen Ausführungen ist das Anschlagteil 40 mit seinem auf die Abtriebswelle 32 geschobenen und als Anlaufscheibe dienenden ringförmigen Abschnitt 41 vom Ritzel 33 verschwenkbar. Demgegenüber besitzt die Ausführung nach der Fig. 10 ein Anschlagteil 40, das eine feste Lage im Getriebegehäuse 15 einnimmt, jedoch ebenfalls mit einem ringförmigen Abschnitt 41 auf die Abtriebswelle 32 aufgeschoben ist und dadurch zusätzlichen Halt erfährt. Auch der ringförmige Abschnitt 41 des Anschlagteils 40 aus Fig. 10 kann als Anlaufscheibe für einen der Hebel 30 und 31 der Schwinge 19 dienen. Das Anschlagteil 40 weist nun zwei Arme 70 auf, die elastisch sind und gehäusefeste Gegenanschläge für das als Ritzel 33 verwendete Zahnsegment bilden. Den elastisch nachgebenden Armen 70 ist jeweils ein starrer Anschlag 71 nachgeordnet, gegen den ein Arm nach einem bestimmten Weg stößt. Dadurch soll eine zu starke Beanspruchung der Arme 70 vermieden werden, wenn versucht wird, die Abtriebswelle 32 von außen zu drehen.

Damit die Arme 70 nicht zu nachgiebig sind, sind sie durch eine metallische Blattfeder 72 verstärkt, die entweder direkt in den Kunststoff des Anschlagteils 40 eingegossen oder nachträglich in eine Nut des Anschlagteils 40 eingelegt sein kann.

In Fig. 10 erkennt man außerdem einen Abstützring 73 für das Schneckenrad 19, an den ein sich bis zum Anschlagteil 40 erstreckender Halteteil 74 angeformt ist. An diesem Halteteil 74 befinden sich die starren Anschläge 71. Bei der gezeigten Ausführung ist das Anschlagteil 40 in eine Aussparung 75 des Halteteils 74 hineingesteckt und dadurch gegen Verdrehen gesichert. Für verschiedene Pendelwinkel der Abtriebswelle 32 werden somit nur verschiedene Anschlagteile 40 verwendet.

Insbesondere bei großen Stückzahlen wird man jedoch den Abstützring 73 mit dem Halteteil 74 und das Anschlagteil 40 einstückig aus Kunststoff herstellen.

## Patentansprüche

1. Antriebsvorrichtung, insbesondere für eine Scheibenwischeranlage an einem Kraftfahrzeug, mit einem Antriebsmotor, mit einem diesem nachgeordneten, in einem Getriebegehäuse (15) untergebrachten Getriebe, das eine pendelnd angetriebene Antriebswelle (32) und ein verdrehsicher auf dieser sitzendes Ritzel (33) aufweist, sowie mit einem Anschlagteil (40) zur Begrenzung des Pendelwinkels der Abtriebswelle (32), wobei das Anschlagteil (40) entweder mit der Abtriebswelle (32) verschwenkbar ist und mit gehäusefesten Gegenanschlägen zusammenwirkt, oder aber fest im Getriebegehäuse angeordnet ist und gehäusefeste Gegenanschläge für Anschläge am Ritzel bildet, dadurch gekennzeichnet, daß das Anschlagteil (40) mit einem ringförmigen Abschnitt (41) auf die Abtriebswelle (32) aufgeschoben ist und der ringförmige Abschnitt (41) des Anschlagteils als Anlaufscheibe zur axialen Abstützung des Ritzels (33) am Getriebegehäuse (15) dient.

2. Antriebsvorrichtung nach Anspruch 1 dadurch gekennzeichnet, daß die Abtriebswelle (32) auf der einen Seite des Ritzels (33) aus dem Getriebegehäuse (15) heraustritt und daß der ringförmige Abschnitt (41) des Anschlagteils (40) auf das auf der anderen Seite des Ritzels (33) vorstehende Ende (43) der Abtriebswelle (32) aufgeschoben ist.

3. Antriebsvorrichtung nach Anspruch 2, dadurch gekennzeichnet, daß der ringförmige Abschnitt (41) des Anschlagteils (40) über dem Ende (43) der Abtriebswelle (32) geschlossen ist.

4. Antriebsvorrichtung nach Anspruch 1 dadurch gekennzeichnet, daß, daß sich der ringförmige Abschnitt (41) des Anschlagteils (40) auf der Seite des Ritzels (33) befindet, auf der die Abtriebswelle (32) aus dem Getriebegehäuse (15) heraustritt.

5. Antriebsvorrichtung nach einem vorhergehenden Anspruch, dadurch gekennzeichnet, daß das Anschlagteil (40) vom Ritzel (33) um die Achse der Abtriebswelle (32) verschwenkbar ist und mit einem Anschlag (47, 52) mit mindestens einem gehäusefesten Gegenanschlag (51, 55) zusammenwirkt.

6. Antriebsvorrichtung nach Anspruch 5, dadurch gekennzeichnet, daß das Ritzel (33) am Umfang eine Aussparung (46) aufweist, in die das Anschlagteil (40) mit einem Mitnehmer (45) radial eingreift.

7. Antriebsvorrichtung nach Anspruch 6, dadurch gekennzeichnet, daß das Ritzel (33) im Abstand zur inneren Begrenzungsfläche der Aussparung (46) mit mindestens einem Vorsprung (62) in Umfangsrichtung in die Aussparung (46) hineinragt und der Mitnehmer (45) am Anschlagteil (40) hinter den Vorsprung (62) greift.

8. Antriebsvorrichtung nach Anspruch 5, 6 oder 7 dadurch gekennzeichnet, daß Ritzel (33) und Anschlagteil (40) in Schwenkrichtung ohne toten Gang miteinander gekoppelt sind.

9. Antriebsvorrichtung nach einem der Ansprüche 5 bis 8, dadurch gekennzeichnet, daß der Anschlag (47, 52) des Anschlagteils (40) in Achsrichtung der Abtriebswelle (32) vom ringförmigen Abschnitt (41) oder vom Mitnehmer (45) des Anschlagteils (40) absteht.

10. Antriebsvorrichtung nach einem der Ansprüche 5 bis 9, dadurch gekennzeichnet, daß, in Umfangsrichtung des Ritzels (33) betrachtet, die Mitte des Mitnehmers (45) und die Mitte des Anschlags (47, 52) des Anschlagteils (40) gegeneinander versetzt sind.

11. Antriebsvorrichtung nach einem der Ansprüche 5 bis 10, dadurch gekennzeichnet, daß das vom Ritzel (33) verschwenkbare Anschlagteil (40) einen ringförmigen Abschnitt (41), der auf der einen Seite des Ritzels (33) auf das Ende (43) der Abtriebswelle (32) aufgeschoben ist, einen an den ringförmigen Abschnitt (41) angeformten Mitnehmer (45), der in eine Aussparung (46) am Umfang des Ritzels (33) eingreift, und einen an den Mitnehmer (45) angeformten Anschlag (47, 52) aufweist, der auf der anderen Seite des Ritzels (33) mit dem mindestens einen gehäusefesten Gegenanschlag (51, 55) zusammenwirkt.

12. Antriebsvorrichtung nach einem der Ansprüche 5 bis 10, dadurch gekennzeichnet, daß das vom Ritzel (33) verschwenkbare Anschlagteil (40) einen ringförmigen Abschnitt (41), der sich auf der Seite des Ritzels (33) befindet, auf der das Getriebegehäuse (15) mindestens einen Gegenanschlag (51, 55) besitzt, einen an den ringförmigen Abschnitt (41) angeformten Mitnehmer (45), der sich Zum Ritzel (33) hin axial vom ringförmigen Abschnitt (41) wegerstreckt, und einen an den ringförmigen Abschnitt (41) angeformten Anschlag (47, 52) aufweist, der sich von der dem Ritzel (33) abgewandten Seite des ringförmigen Abschnitts (41) axial von diesem wegerstreckt.

13. Antriebsvorrichtung nach einem der Ansprüche 1 bis 12, dadurch gekennzeichnet, daß das Anschlagteil (40) einen ersten Anschlag (47), der mit mindestens einem elastisch nachgiebigen, gehäusefesten Gegenanschlag (51), und einen zweiten Anschlag (52) aufweist, der mit mindestens einem starren gehäusefesten Gegenanschlag (55) zusammenwirkt, und daß der Abstand zwischen dem ersten Anschlag (47) und dem nachgiebigen Gegenanschlag (51) kleiner ist als zwischen dem zweiten Anschlag (52) und dem starren Gegenanschlag (55).

14. Antriebsvorrichtung nach Anspruch 14, dadurch gekennzeichnet daß der zweite Anschlag (52) radial über den ersten Anschlag (47) vorspringt.

15. Antriebsvorrichtung nach Anspruch 14 dadurch gekennzeichnet daß sich der zweite Anschlag (52) zumindest annähernd innerhalb des Kopfkreises des Ritzels (33) befindet.

16. Antriebsvorrichtung nach einem der Ansprüche 1 bis 4, dadurch gekennzeichnet, daß das Anschlagteil (40) einen festen Sitz im Getriebegehäuse (15) hat und daß der ringförmige Abschnitt (41) des Anschlagteils (40) einstückig mit zumindest einem Arm (70) hergestellt ist, der elastisch nachgiebig ist und eine gehäusefesten Gegenanschlag für einen Anschlag am Ritzel bildet.

17. Antriebsvorrichtung nach Anspruch 16, dadurch gekennzeichnet, daß dem elastisch nachgiebigen Arm (70) ein starrer Anschlag (71) nachgeordnet ist, gegen den der Arm (70) nach einem bestimmten Weg stößt.

18. Antriebsvorrichtung nach Anspruch 16 oder 17, dadurch gekennzeichnet, daß das Anschlagteil (40) aus Kunststoff hergestellt ist und daß der elastisch nachgiebige Arm (70) durch eine metallische Blattfeder (72) verstärkt ist.

19. Antriebsvorrichtung nach Anspruch 16, 17 oder 18, dadurch gekennzeichnet, daß zu dem Getriebe ein Kurbelrad (19) gehört, das über einen Ring (73) außerhalb des Kurbelradius axial abgestützt ist, und daß der Ring (73) und das Anschlagteil (40) einstückig aus Kunststoff hergestellt sind.

20. Antriebsvorrichtung nach Anspruch 16, 17 oder 18, dadurch gekennzeichnet, daß zu dem Getriebe ein Ritzel (19) gehört, das über einen Ring (73) außerhalb des Kurbelradius axial abgestützt ist, daß sich ein an den Ring (73) angeformtes Halteteil (74) bis zum Anschlagteil (40) erstreckt, und daß das Anschlagteil (40) und das Halteteil (74) des Ringes (73) ineinandergesteckt sind.

## Claims

1. A drive device, in particular for a windscreen wiper system in a motor vehicle, with a drive motor, with a gearing following the drive motor and accommodated in a gear housing (15), which gearing comprises an output shaft (32) driven in pendulum fashion and a pinion (33) fitted on the output shaft in a manner protected against twisting, and with a stop member (40) for limiting the pendulum angle of the output shaft (32), the stop member (40) either being swivellable with the output shaft (32) and cooperating with counterstops fixed to the housing, or being arranged immovably in the gear housing and forming counterstops fixed to the housing for stops on the pinion, characterised in that a ring-shaped portion (41) of the stop member (40) is slipped onto the output shaft (32) and the ring-shaped portion (41) of the stop member acts as a buffer disc for the axial support of the pinion (33) on the gear housing (15).

2. A drive device according to claim 1, characterised in that, on one side of the pinion (33), the output shaft (32) extends from the gear housing (15), and the ring-shaped portion (41) of the stop member (40) is slipped onto the end (43) of the output shaft (32) protruding on the other side of the pinion (33).

3. A drive device according to claim 2, characterised in that the ring-shaped portion (41) of the stop member (40) is closed above the end (43) of the output shaft (32).

4. A drive device according to claim 1, characterised in that the ring-shaped portion (41) of the stop member (40) is located on that side of the pinion (33) where the output shaft (32) extends from the gear housing (15).

5. A drive device according to one of the preceding claims, characterised in that the stop member (40) may be swivelled about the axis of the output shaft (32) by the pinion (33) and, by means of a stop (47, 52), cooperates with at least one counterstop (51, 55) fixed to the housing.

6. A drive device according to claim 5, characterised in that the pinion (33) has a recess (46) on its circumference, into which recess the stop member (40) engages radially by means of a carrier (45).

7. A drive device according to claim 6, characterised in that, spaced from the inner limiting face of the recess (46), the pinion (33), in a circumferential direction, protrudes into the recess (46) with at least one projection (62), and the carrier (45) on the stop member (40) engages behind the projection (62).

8. A drive device according to claim 5, 6 or 7, characterised in that the pinion (33) and the stop member (40) are coupled with each other without lost travel in the swivelling direction.

9. A drive device according to one of claims 5 to 8, characterised in that, in an axial direction of the output shaft (32), the stop (47, 52) of the stop member (40) projects from the ring-shaped portion (41) or from the carrier (45) of the stop member (40).

10. A drive device according to one of claims 5 to 9, characterised in that, when viewing in a circumferential direction of the pinion (33), the centre of the carrier (45) and the centre of the stop (47, 52) of the stop member (40) are offset relative to each other.

11. A drive device according to one of claims 5 to 10, characterised in that the stop member (40) adapted to be swivelled by the pinion (33) comprises a ring-shaped portion (41) which, on one side of the pinion (33), is pushed onto the end (43) of the output shaft (32), comprises a carrier (45) formed onto the ring-shaped portion (41) and engaging in a recess (46) on the circumference of the pinion (33), and comprises a stop (47, 52) formed onto the carrier (45), which stop, on the other side of the pinion (33), cooperates with at least one counterstop (51, 55) fixed to the housing.

12. A drive device according to one of claims 5 to 10, characterised in that the stop member (40) adapted to be swivelled by the pinion (33) comprises a ring-shaped portion (41) located on the side of the pinion (33) where the gear housing (15) has at least one counterstop (51, 55), comprises a carrier (45) formed on the ring-shaped portion (41) and extending axially towards the pinion (33) away from the ring-shaped portion (41), and comprises a stop (47, 52) formed onto the ring-shaped portion (41) and, on the side of the ring-shaped portion (41) remote from the pinion (33), extending axially away from the former.

13. A drive device according to one of claims 1 to 12, characterised in that the stop member (40) comprises a first stop (47) having at least one elastically flexible counterstop (51) fixed to the housing and a second stop (52) cooperating with at least one rigid counterstop (55) fixed to the housing, and in that the spacing between the first stop (47) and the flexible counterstop (51) is smaller than the spacing between the second stop (52) and the rigid counterstop (55).

14. A drive device according to claim 13, characterised in that the second stop (52) protrudes radially beyond the first stop (47).

15. A drive device according to claim 14, characterised in that the second stop (52) is positioned, at least substantially, within the crown line of the pinion (33).

16. A drive device according to one of claims 1 to 4, characterised in that the stop member (40) has a fixed seat in the gear housing (15), and in that the ring-shaped portion (41) of the stop member (40) is made in one piece at least with one arm (70), which is elastically flexible and forms a counterstop fixed to the housing for a stop on the pinion.

17. A drive device according to claim 16, characterised in that the elastically flexible arm (70) is followed by a rigid stop (71) against which the arm (70) abuts after having covered a defined distance of travel.

18. A drive device according to claim 16 or 17, characterised in that the stop member (40) is made of plastics material, and in that the elastically flexible arm (70) is strengthened by a metallic leaf spring (72).

19. A drive device according to claim 16, 17 or 18, characterised in that a crank wheel (19) belongs to the gearing, which crank wheel is axially supported outside the crank radius by means of a ring (73), and in that the ring (73) and the stop member (40) are made in one piece from plastics material.

20. A drive device according to claim 16, 17 or 18, characterised in that a pinion (19) belongs to the gearing, which pinion is axially supported outside the crank radius by means of a ring (73), in that a holding member (74) formed on the ring (73) extends as far as the stop member (40), and in that the stop member (40) and the holding member (74) of the ring (73) are telescoped.

## Revendications

1. Dispositif d'entraînement, notamment pour un système d'essuie-glace sur a véhicule automobile, comprenant un moteur d'entraînement, un mécanisme, qui est associé à ce moteur et est placé dans un boîtier de mécanisme (15) et qui comprend un arbre de sortie (32) entraîné suivant un mouvement pendulaire et un pignon (33) calé sur cet arbre de sortie, et une pièce de butée (40) servant à limiter l'angle de mouvement pendulaire de l'arbre de sortie (32), la pièce de butée (40) étant soit agencée de façon à pouvoir pivoter avec l'arbre de sortie (32), en coopérant avec des butées complémentaires fixes vis-à-vis du boîtier, soit en revanche disposée d'une manière fixe dis le boîtier du mécanisme, et formant des butées complémentaires fixes vis-à-vis du boîtier pour des butées solidaires du pignon, caractérisé en ce que la pièce de butée (40) est enfilée par une section annulaire (41) sur l'arbre de sortie (32) et la section annulaire (41) de la pièce de butée (40) sert de disque d'appui pour soutenir axialement le pignon (33) sur le boîtier de mécanisme (15).

2. Dispositif d'entraînement selon la revendication 1, caractérisé en ce que l'arbre de sortie (32) sort du boîtier de mécanisme (15) sur un premier côté du pignon (33) et en ce que la section annulaire (41) de la pièce de butée (40) est enfilée sur l'extrémité (43) de l'arbre de sortie (32) qui fait saillie de l'autre côté du pignon (33).

3. Dispositif d'entraînement selon le revendication 2, caractérisé en ce que la section annulaire (41) de la pièce de butée (40) est fermée par-dessus l'extrémité (43) de l'arbre de sortie (32).

4. Dispositif d'entraînement selon la revendication 1, caractérisé en ce que la section annulaire (41) de la pièce de butée (40) est située du côté du pignon (33) par lequel l'arbre de sortie (32) sort du boîtier de mécanisme (15).

5. Dispositif d'entraînement selon l'une des revendications précédentes caractérisé en ce que la pièce de butée (40) est agencée de façon à pouvoir être entraînée d'une manière pivotante par le pignon (33) autour de l'axe de l'arbre de sortie (32) et coopère, par une butée (47, 52), avec au moins une butée complémentaire (51, 55) fixe vis-à-vis du boîtier.

6. Dispositif d'entraînement selon la revendication 5, caractérisé en ce que, sur son contour périphérique, le pignon (33) comporte un espace libre (46) dis lequel la pièce de butée (40) vient a prise suivant la direction radiale par une partie d'entraînement (45).

7. Dispositif d'entraînement selon la revendication 6, caractérisé en ce qu'à une certaine distance vis-à-vis de la surface limitant l'espace libre (46), le pignon (33) fait saillie dans l'espace libre (46), suivant la direction circonférentielle, par au moins une partie en saillie (62) et en ce que la partie d'entraînement (45) de la pièce de butée (40) vient en prise derrière la partie en saillie (62).

8. Dispositif d'entraînement selon la revendication 5, 6 ou 7, caractérisé en ce que le pignon (33) et la pièce de butée (40) sont accouplés l'un à l'autre, sans course morte, suivit la direction de pivotement.

9. Dispositif d'entraînement selon l'une des revendications 5 à 8, caractérisé en ce que les butées (47, 52) de la pièce de butée (40) fait saillie sur la section annulaire (41) ou sur la partie d'entraînement (45) de la pièce de butée (40) suivant la direction axiale de l'arbre de sortie (32).

10. Dispositif d'entraînement selon l'une des revendications 5 à 9, caractérisé en ce que, considéré suivant la direction circonférentielle du pignon (33), le milieu de la partie d'entraînement (45) et le milieu de la butée (47, 52) de la pièce de butée (40) sont décalés l'un vis-à-vis de l'autre.

11. Dispositif d'entraînement selon l'une des revendications 5 à 10, caractérisée en ce que la pièce de butée (40) agencée de façon à pouvoir être déplacée d'une manière pivotante par le pignon (33) comprend une section annulaire (41), qui est enfilée, d'un premier côté du pignon (33), sur l'extrémité (43) de l'arbre de sortie (32), une partie d'entraînement (45), réalisée au formage sur la section annulaire (41) et venant en prise dans un espace libre (46) situé sur le contour périphérique du pignon (33), et une butée (47,52) réalisée au formage sur la partie d'entraînement (45) et coopérant, de l'autre coté du pignon (33), avec la ou les butées complémentaires (51, 55) fixes vis-à-vis du boîtier.

12. Dispositif d'entraînement selon l'une des revendications 5 à 10, caractérisé en ce que la pièce de butée (40) agencée de façon à pouvoir être déplacée d'une manière pivotante par le pignon (33) comprend une section annulaire (41), qui est située du côté du pignon (33) sur lequel le boîtier de mécanisme (15) comporte au moins une butée complémentaire (51, 55), une partie d'entraînement (45), réalisée au formage sur la section annulaire (41) et s'éloignant axialement de la section annulaire (41) vers le pignon (33), et une butée (47, 52) réalisée au formage sur la section annulaire (41) et s'éloignant axialement de la section annulaire (41) du côté de cette dernière qui est situé à l'opposé du pignon (33).

13. Dispositif d'entraînement selon l'une des revendications 1 à 12, caractérisé en ce que la pièce de butée (40) comprend une première butée (47), qui coopère avec au moins une butée complémentaire (51) pouvant céder élastiquement et fixe vis-à-vis du boîtier, et une seconde butée (52) qui coopère avec au moins une butée complémentaire (55) rigide et fixe vis-à-vis du boîtier et en ce que la distance séparant la première butée (47) de la butée complémentaire (51) pouvant céder élastiquement est inférieure à la distance séparant la seconde butée (52) de la butée complémentaire (55) rigide.

14. Dispositif d'entraînement selon la revendication 13, caractérisé en ce que la seconde butée (52) fait saillie radialement au-delà de la première butée (47).

15. Dispositif d'entraînement selon la revendication 14, caractérisé en ce que la seconde butée (52) est située d'une manière au moins approximative à l'intérieur du cercle de tête du pignon (33).

16. Dispositif d'entraînement selon l'une des revendications 1 à 4, caractérisé en ce que la pièce de butée (40) possède un appui fixe dans le boîtier de mécanisme (15) et en ce que la section annulaire (41) de la pièce de butée (40) est réalisée d'une pièce avec au moins un bras (70) qui peut céder élastiquement et forme une butée complémentaire, fixe vis-a-vis du boîtier, pour une butée située sur le pignon.

17. Dispositif d'entraînement selon la revendication 16, caractérisé en ce qu'il est associé au bras pouvant céder élastiquement (70) une butée (71) rigide que le bras (70) vient heurter après une course déterminée.

18. Dispositif d'entraînement selon l'une des revendications 16 et 17, caractérisé en ce que la pièce de butée (40) est en matière plastique et en ce que le bras (70) pouvant céder élastiquement est renforcé par un ressort à lame métallique (72).

19. Dispositif d'entraînement selon l'une des revendications 16, 17 ou 18, caractérisé en ce que le mécanisme comprend une roue à crémaillère (19) qui est soutenue axialement au moyen d'un anneau (73) à l'extérieur du rayon de manivelle et en ce que l'anneau (73) et la pièce de butée (40) sont réalisés d'une pièce, en matière plastique.

20. Dispositif d'entraînement selon l'une des revendications 16, 17 ou 18, caractérisé en ce que le mécanisme comprend un pignon (19) qui est soutenu axialement au moyen d'un anneau (73) à l'extérieur du rayon de manivelle, en ce qu'une partie de maintien (74) réalisée au formage sur l'anneau (73) s'étend jusqu'à la pièce de butée (40) et en ce que la pièce de butée (40) et la partie de maintien (74) de l'anneau (73) sont emboîtées l'une dans l'autre.
